# EUROPÄISCHE PATENTANMELDUNG

(11) **EP 3 713 073 A1**
(43) Veröffentlichungstag der Anmeldung: **23.09.2020**
(21) Anmeldenummer: 19163833.7
(22) Anmeldetag: 19.03.2019
(51) Int. Cl.: H02M 7/483

(54) **STROMRICHTER UND VERFAHREN ZU DESSEN REGELUNG**

(71) Anmelder: Siemens Aktiengesellschaft, 80333 München (DE)
(72) Erfinder: DALLMER-ZERBE, Kilian, 91088 Bubenreuth (DE); SEMMLER, Sebastian, 90427 Nürnberg (DE)

(57) **Zusammenfassung**

Die Erfindung betriff ein Verfahren zum Regeln eines Stromrichters (1) mit einer Vielzahl von Schaltmodulen (SM1, SM2), die jeweils steuerbare abschaltbare Halbleiterschalter (H1-4, S1-2) sowie einen Energiespeicher (C) umfassen. Das Verfahren zeichnet sich dadurch aus, dass eine Schaltfrequenz der Schaltmodule unter Berücksichtigung wenigstens eines Integralgrenzwertes geregelt wird, wobei der wenigstens eine Integralgrenzwert in Abhängigkeit von Energiespeicherspannungen der Schaltmodule in der Zeit veränderbar festgelegt wird. Die Erfindung betrifft ferner einen Stromrichter zur Durchführung des erfindungsgemäßen Verfahrens.

## Beschreibung

Die Erfindung betriff ein Verfahren zum Regeln eines Stromrichters mit einer Vielzahl von Schaltmodulen, die jeweils steuerbare abschaltbare Halbleiterschalter sowie einen Energiespeicher umfassen.

Ein solches Verfahren ist aus der WO 2012/103936 A1 bekannt. In jedem Stromrichterarm des bekannten Stromrichters, wobei die Stromrichterarme sich jeweils zwischen einem der Gleichspannungspole der Stromrichteranordnung und einem der Wechselspannungsanschlüsse erstrecken, sind zweipolige Schaltmodule eines ersten Typs in Form von Vollbrückenschaltmodulen und zweipolige Schaltmodule eines zweiten Typs in Form von Halbbrückenschaltmodulen angeordnet.

Üblicherweise wird bei der Regelung des Stromrichters ein Spannungssollwert vorgegeben, der die am Stromrichterarm zu stellende Armspannung vorgibt. Entsprechend wird der Spannungssollwert mittels einer Regelungseinrichtung der Stromrichteranordnung in Ansteuersignale umgesetzt, die an Ansteuerungsbaugruppen der einzelnen Schalmodule übermittelt werden. Gemäß der Ansteuersignale werden Schalthandlungen an den Schaltmodulen ausgelöst. Eine Schalthandlung verändert dabei einen Schaltzustand des Schaltmoduls durch geeignetes Schalten der Halbleiterschalter. Üblicherweise wird dabei der Energiespeicher des jeweiligen Schaltmoduls in den Strompfad geschaltet (Zuschalten des Schaltmoduls) oder überbrückt (Abschalten des Schaltmoduls). Es ist bekannt, dass die Halbbrückenschaltmodule gegenüber den Vollbrückenschaltmodulen im Betrieb des Stromrichters geringere Leitungsverluste ermöglichen. Zudem verursacht jede Schalthandlung zusätzliche Schaltungsverluste.

Werden in einem und demselben Stromrichter Schaltmodule zweier unterschiedlicher Typen verwendet, so stellt sich die besondere Herausforderung der gleichzeitigen Regelung bzw.

Steuerung der beiden Schaltmodultypen. Das Regelungsverfahren muss insbesondere dafür sorgen, dass beide Schaltmodultypen energetisch bilanziert sind.

Die Aufgabe der Erfindung ist es, ein eingangs genanntes Verfahren anzugeben, das einen möglichst zuverlässigen und verlustarmen Betrieb des Stromrichters erlaubt.

Die Aufgabe wird bei dem artgemäßen Verfahren dadurch gelöst, dass eine Schaltfrequenz der Schaltmodule unter Berücksichtigung wenigstens eines Integralgrenzwertes geregelt wird, wobei der wenigstens eine Integralgrenzwert in Abhängigkeit von Energiespeicherspannungen der Schaltmodule in der Zeit veränderbar festgelegt wird. Demnach wird erfindungsgemäß die Schaltfrequenz der Schaltmodule geregelt. Aufgrund der Schaltfrequenzregelung wird erreicht, dass die Schaltverluste im Stromrichter und damit die thermische Beanspruchung des Stromrichters innerhalb von vorgesehenen bzw. vorbestimmten Auslegungsgrenzen zu halten. Die Schaltfrequenzregelung kann insbesondere eine Regelung einer mittleren Schaltfrequenz eines der Stromrichterarme oder eines der Stromrichterzweige umfassen, wobei ein Stromrichterzweig sich zwischen den beiden Gleichspannungspolen erstreckt und zwei Stromrichterarme umfasst. Die mittlere Schaltfrequenz kann dabei wie folgt definiert sein. Zunächst wird ein Zeitabschnitt definiert, der als Schaltperiode im Sinne eines moving average verwendet wird. Dann wird die Anzahl der Zuschaltvorgänge aller betroffenen Schaltmodule innerhalb einer Schaltperiode ermittelt. Zudem wird die Anzahl der Abschaltvorgänge der betroffenen Schaltmodule innerhalb der Schaltperiode ermittelt. Diese Beiden ermittelten Werte werden durch den Wert 2*n geteilt, wobei n die Anzahl der betroffenen Schaltmodule, beispielsweise Anzahl der Schaltmodule in einem Stromrichterzweig, ist. Die Schaltfrequenz wird unter Berücksichtigung eines Integralgrenzwertes geregelt. Diese Berücksichtigung bedeutet geeigneterweise, dass beim Überschreiten bzw. Unterschreiten des Integralgrenzwertes die Schaltfrequenz der Schaltmodule erhöht wird. Insbesondere können zwei Integralgrenzwerte, ein oberer Integralgrenzwert und ein unterer Integralgrenzwert definiert werden. Der obere und der untere Integralgrenzwert können beispielsweise wie folgt bestimmt werden. Zunächst wird eine Spannungsabweichung als Differenz zwischen einem Spannungssollwert und einem ermittelten Spannungsistwert berechnet. Der Spannungsistwert ist geeigneterweise eine Summe der gemessenen Energiespeicherspannungen der Schaltmodule, das heißt, der am jeweiligen Energiespeicher der Schaltmodule anstehenden Spannungen aller zugeschalteten Schaltmodule (im betreffenden Stromrichterarm oder -zweig). Die Spannungsabweichung wird dann in der Zeit integriert (geeigneterweise über eine Summe über sampling-Zeitpunkte). Es ist hierbei zu beachten, dass der Spannungsfehlerwert und damit auch das Integral sowohl positive als auch negative Werte annehmen kann. Der obere Integralgrenzwert definiert den maximalen zulässigen Wert des Integrals, der untere Integralgrenzwert definiert den minimalen zulässigen Wert des Integrals. Zulässig bedeutet in diesem Zusammenhang, dass bei Überschreitung des oberen Integralgrenzwertes wenigstens ein abgeschaltetes Schaltmodul zugeschaltet beziehungsweise im Fall von bipolar schaltbaren Schaltmodulen (wie Vollbrückenschaltmodule) ein negativ eingeschaltetes Schaltmodul abgeschaltet (gesperrt) wird. Bei Unterschreitung des unteren Integralgrenzwertes wird hingegen wenigstens ein zugeschaltetes Schaltmodul abgeschaltet (oder, im Fall von Vollbrückenschaltmodulen, ein Schaltmodul negativ zugeschaltet). Die beiden Integralgrenzwerte bzw. deren Differenz definieren damit einen zulässigen Spannungsabweichungsbereich. Je größer der Spannungsabweichungsbereich ist, desto niedriger ist die resultierende (mittlere) Schaltfrequenz. Mit einer niedrigeren Schaltfrequenz sinken zugleich die Schaltverluste im Stromrichter.

Erfindungsgemäß ist es vorgesehen, dass der wenigstens eine Integralgrenzwert in Abhängigkeit von Energiespeicherspannungen der Schaltmodule in der Zeit veränderbar festgelegt wird.

Das bedeutet, dass der Integralgrenzwert nicht statisch als einzelner Wert vorgegeben ist, sondern im Betrieb des Stromrichters fortlaufen neu durch Berechnung und auf Grundlage von Messungen festgelegt wird. Auf diese Weise kann der wenigstens eine Integralgrenzwert vorteilhaft an weitere Anforderungen des Stromrichterbetriebs angepasst werden. Beispielsweise kann durch eine höhere Schaltfrequenz eine verbesserte Balancierung der Schaltmodulspannungen bzw. der Energiespeicherspannungen erreicht werden. Wird eine solche verbesserte oder genauere Balancierung erforderlich, so kann entsprechend beispielsweise der Spannungsabweichungsbereich durch eine entsprechende Neufestlegung des oder der Integralgrenzwerte verkleinert werden. Auf diese Weise kann eine Verbesserung der Zuverlässigkeit des Stromrichters erreicht werden.

Bevorzugt wird anhand einer Auswertung der Energiespeicherspannungen deren Symmetrierung mittels zusätzlicher Schalthandlungen durchgeführt. Die Symmetrierung bzw. Balancierung der Schaltmodulspannungen bzw. der Energiespeicherspannungen dient dazu, dass einzelne Schaltmodulspannungen weder zu hoch noch zu niedrig werden. Die Schaltmodulspannung (eines zugeschalteten Schaltmoduls) entspricht dem Betrag nach der Energiespeicherspannung am Energiespeicher des betreffenden Schaltmoduls oder der Nullspannung. Weicht die Energiespeicherspannung zu stark von einem vorgegebenen Wert (bspw. einem Mittelwert) ab, so kann das zu Beeinträchtigungen bis hin zu einem Ausfall des Stromrichters führen, ist also zu vermeiden. Durch Zu- oder Abschalten eines Schaltmoduls kann dessen Energiespeicher auf- oder entladen werden. Somit können durch zusätzliche Schalthandlungen die Schalmodulspannungen im Sinne einer Symmetrierung gesteuert werden. Eine vollständige Symmetrierung liegt dann vor, wenn alle Schaltmodulspannungen bzw. zugeordnete Energiespeicherspannungen gleich sind oder zumindest in einem vorbestimmten Toleranzbereich ("Totband") liegen.

Mittels der zeitlichen Variabilität der Festlegung des wenigstens einen Integralgrenzwertes kann (mittelbar) Einfluss auf die Symmetrierung gewonnen werden. Es ist hierbei anzumerken, dass durch den Integralgrenzwert grundsätzlich zunächst Spannungsfolgen (durch sogenannte Basis-Schalthandlungen) gesteuert werden. Trotzdem kann mittels des Integralgrenzwertes auch die Symmetrierung mittelbar beeinflusst werden: Je weniger Schaltmodule geschaltet werden, desto länger sind die einzelnen Schaltmodule im Strompfad, desto stärker ändert sich die Spannung der Schaltmodule (Energiespeicherspannung) im Strompfad gegenüber der Spannung ausgeschalteter Schaltmodule, desto größer ist die Spannungsdifferenz zwischen Schaltmodulen (Asymmetrie), und desto wahrscheinlicher sind Zusatzschalthandlungen, die zum Symmetrieren beziehungsweise Balancieren der Schaltmodulgruppen (Schaltmodule gleichen Typs) führen können. Vorzugsweise wird dazu eine Spannungsdifferenz der Energiespeicherspannungen ermittelt, wobei die Spannungsdifferenz mit einem Differenzgrenzwert verglichen wird, und, falls die Spannungsdifferenz den Differenzgrenzwert überschreitet, der wenigstens eine Integralgrenzwert der Schaltfrequenzregelung, z.B. der obere Integralgrenzwert, herabgesetzt wird. Die Spannungsdifferenz kann beispielsweise eine Differenz einer Energiespeicherspannung von einem Mittelwert aller betreffenden Energiespeicherspannungen sein. Durch Herabsetzung des Integralgrenzwertes kann die Schaltfrequenz erhöht werden, wodurch mehr Schalthandlungen ausgeführt werden, wodurch wiederum die Schaltmodulspannungen schneller und genauer symmetriert werden können (auch hier wiederum indirekt: bei einer höheren Schaltfrequenz können Symmetrierungsschalthandlungen verhindert werden). Mit dieser Maßnahme wird verhindert, dass bei hohen Schaltfrequenzen der obere Intgralgrenzwert weiter erhöht wird, was zu verhältnismäßig hohen Spannungsabweichungen führen würde.

Zweckmäßigerweise wird die Schaltfrequenzregelung mittels einer Frequenzstatik durchgeführt. Die Frequenzstatik ist eine Regelungskennlinie mit einem abschnittsweise linearen Verlauf, die eine Abhängigkeit zwischen der Schaltfrequenz und den Integralgrenzwerten.

Das hier beschriebene Verfahren ist besonders gut für einen Stromrichter mit zwei unterschiedlichen Typen von Schaltmodulen geeignet. Dazu sind wenigstens einige der Schaltmodule Schaltmodule eines ersten Typs und wenigstens einige weitere der Schaltmodule Schaltmodule eines zweiten Typs, wobei die Symmetrierung der Energiespeicherspannungen unter Berücksichtigung einer Spannungsdifferenz der Energiespeicherspannungen der Schaltmodule des ersten Typs und einer Spannungsdifferenz der Energiespeicherspannung der Schaltmodule des zweiten Typs durchgeführt wird. Die Schaltmodule der unterschiedlichen Typen erfahren im Betrieb des Stromrichters unterschiedliche Beanspruchung. Daher wird es als vorteilhaft angesehen, wenn die Schaltmodulspannungen der beiden Schaltmodultypen separat symmetriert werden.

Geeigneterweise werden im Betrieb der Stromrichteranordnung an Anschlussklemmen der Schaltmodule des ersten Typs jeweils eine positive Schaltmodulspannung, eine negative Schaltmodulspannung oder eine Nullspannung erzeugt, und an Anschlussklemmen der Schaltmodule des zweiten Typs jeweils eine positive Schaltmodulspannung oder eine Nullspannung erzeugt werden. Diese Konfiguration bzw. Wahl der Schaltmodultypen ist besonders vorteilhaft, weil auf diese Weise die Möglichkeit zur Spannungsmodulation erweitert wird, wodurch die energetische Ausnutzung der Stromrichteranordnung verbessert und die Übertragungsverluste gesenkt werden (falls die Stromrichteranordnung in einer Energieübertragungsanlage eingesetzt wird). Ein konkretes Beispiel für ein Schaltmodul des ersten Typs ist das Vollbrückenschaltmodul, ein Beispiel für ein Schaltmodul des zweiten Typs ist ein Halbbrückenschaltmodul. Die möglichen Beispiele sind durch die eben genannten selbstredend nicht erschöpft.

Bevorzugt wird die Schaltfrequenz unter Berücksichtigung der Anzahl der Schaltmodule des ersten und des zweiten Typs durchgeführt.

Vorzugsweise werden die Schaltmodule des Stromrichterarmes mit einem Modulationsgrad größer als eins gesteuert. Alle Stromrichterarme des Stromrichters stellen eine Armspannung, die im Betrieb eine Überlagerung einer Gleichspannung UarmDC und einer Wechselspannung UarmAC ist. Der Modulationsgrad M ist das Verhältnis dieser beiden Anteile: M = |UarmAC|/UarmDC. Mit einem Modulationsgrad größer als eins kann die Stromrichteranordnung energetisch besser ausgenutzt werden. Dabei sinkt die Armspannung zeitweise unter den Wert null, so dass in diesen Fällen die Schaltmodule des ersten Typs besonders stark beansprucht sind, was bei der Stromrichterregelung geeigneterweise berücksichtigt wird.

Wie bereits oben beschrieben, kann zur Schaltfrequenzregelung eine mittlere Schaltfrequenz der Schaltmodule ermittelt werden. Zudem kann die mittlere Schaltfrequenz mittels eines gleitenden Durchschnittsfilters (moving average filter) gefiltert werden.

Die Erfindung betrifft ferner einen Stromrichter für Mittel- und Hochspannungsanwendungen, der eine Vielzahl von Schaltmodulen, die jeweils steuerbare abschaltbare Halbleiterschalter und einen Energiespeicher aufweisen, sowie eine Regelungseinrichtung zum Regeln des Stromrichters umfasst.

Ein solcher Stromrichter ist aus der bereits erwähnten Druckschrift WO 2012/103936 A1 bekannt.

Die Aufgabe der Erfindung besteht darin, einen solchen Stromrichter vorzuschlagen, der möglichst zuverlässig und effizient im Betrieb ist.

Die Aufgabe wird erfindungsgemäß durch einen artgemäßen Stromrichter gelöst, dessen Regelungseinrichtung zum Durchführen des erfindungsgemäßen Verfahrens eingerichtet ist.

Die Vorteile des erfindungsgemäßen Stromrichters ergeben sich insbesondere aus den im Zusammenhang mit dem erfindungsgemäßen Verfahren erläuterten Vorteilen. Insbesondere können alle Merkmale, die im Kontext des Verfahrens angegeben wurden, auch beim erfindungsgemäßen Stromrichter allein oder in Kombination eingesetzt werden.

Die Erfindung wird nachfolgend anhand der Figuren 1 bis 4 weiter erläutert werden.
Figur 1 zeigt ein Ausführungsbeispiel eines erfindungsgemäßen Stromrichters in einer schematischen Darstellung;
Figur 2 zeigt ein Beispiel eines Schaltmoduls des ersten Typs in einer schematischen Darstellung;
Figur 3 zeigt ein Beispiel eines Schaltmoduls des zweiten Typs in einer schematischen Darstellung;
Figur 4 zeigt ein Beispiel einer Regelungseinrichtung zur Durchführung des erfindungsgemäßen Verfahrens in einer schematischen Darstellung.

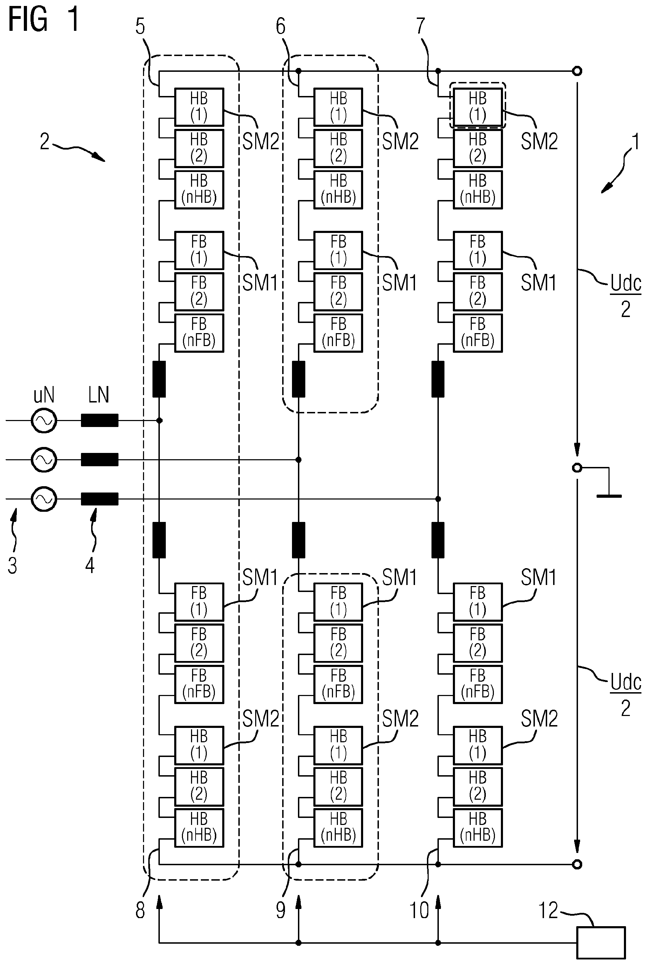

In Figur 1 ist ein Stromrichter 1 dargestellt. Der Stromrichter 1 umfasst Halbleiterschalter in Schaltmodulen, die zu einen modularen Mehrstufenstromrichter (MMC) 2 verbunden sind, der im dargestellten Beispiel zur Umwandlung einer Wechselspannung eines Wechselspannungsnetzes 3, mit dem der MMC 2 mittels eines Netztransformators 4 verbunden ist (wobei lediglich die sekundärseitigen Wicklungen figürlich dargestellt sind), in eine Gleichspannung Udc.

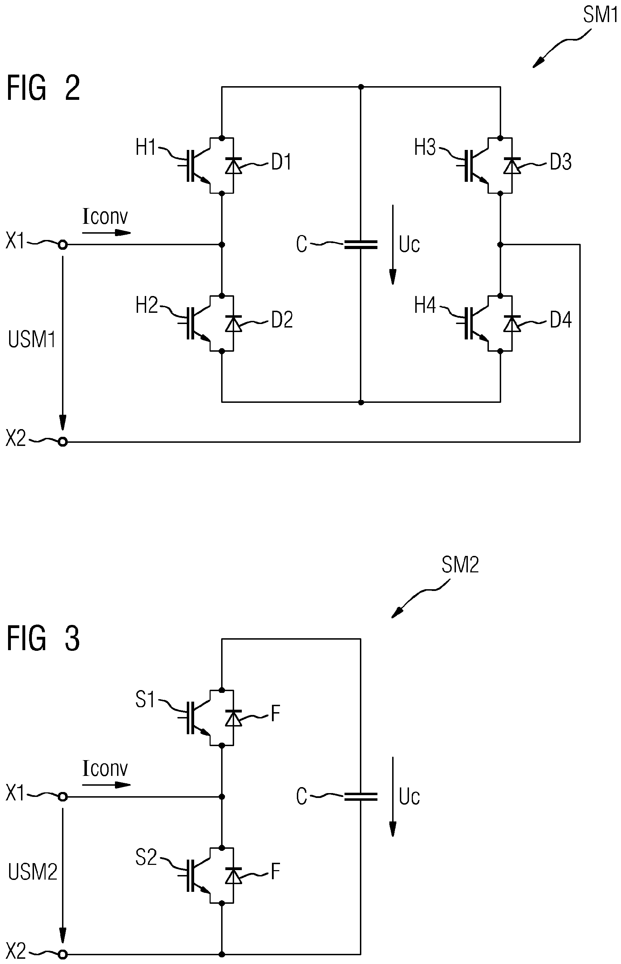

Der MMC 2 umfasst sechs Stromrichterarme 5-10, die miteinander in einer Doppelsternschaltung verbunden sind. Jeder der gleichartig aufgebauten Stromrichterarme 5-10 umfasst eine Arminduktivität 11 sowie eine Reihenschaltung zweipoliger Schaltmodule SM1 des ersten Typs und Schaltmodule SM2 des zweiten Typs. Auch die Anzahl der Schaltmodule SM1 bzw. SM2 in jedem Stromrichterzweig 5-10 ist grundsätzlich beliebig und an die jeweilige Anwendung anpassbar. Die Schaltmodule SM1 des ersten Typs können beispielsweise Vollbrücken-Schaltmodule, die Schaltmodule SM2 des zweiten Typs beispielsweise Halbbrücken-Schaltmodule sein, auf deren Aufbau in den nachfolgenden Figuren 2 und 3 näher eingegangen wird. Jedes Schaltmodul SM umfasst steuerbare Halbleiterschalter, z.B. IGBT oder dergleichen, einen Energiespeicher sowie eine Steuerungsbaugruppe, mittels der die Halbleiterschalter angesteuert werden können. Es ist darüber hinaus grundsätzlich denkbar, dass die Stromrichteranordnung 1 weitere Schaltmodul-Typen umfasst.

Die Stromrichteranlage 1 umfasst ferner eine zentrale Regelungseinrichtung 12, die zum Regeln des MMC 2 und zum Ansteuern der Schaltmodule SM eingerichtet ist. Die Regelungseinrichtung 12 erhält von einer übergeordneten Instanz Vorgaben bezüglich der geforderten Wirkleistung und Blindleistung, die von der Regelungseinheit in Sollwerte einiger Regelungsparameter umgesetzt werden. Die Regelungsparameter können beispielsweise eine wechselspannungsseitige Spannung Uac, ein wechselspannungsseitiger Strom Iac, ein gleichspannungsseitiger Strom Idc und/oder eine gleichspannungsseitige Spannung Udc sein. In Stromrichteranlagen, die als ein symmetrischer Monopol konzipiert sind, sind eine Spannung zwischen dem positiven Gleichspannungspol und dem Erdpotenzial, Udc+, und eine Spannung zwischen dem negativen Gleichspannungspol und dem Erdpotenzial, Udc-, von Bedeutung.

Figur 2 zeigt ein Schaltmodul SM1 des ersten Typs, das für den Stromrichter der Figur 1 geeignet ist, und das in einer Vollbrückenschaltung geschaltet ist. Das Schaltmodul SM1 umfasst einen ersten abschaltbaren Halbleiterschalter H1, dem eine erste Freilaufdiode D1 antiparallel geschaltet ist, einen zweiten abschaltbaren Halbleiterschalter H2, dem eine zweite Freilaufdiode D2 antiparallel geschaltet ist, wobei der erste und der zweite Halbleiterschalter H1, H2 in einer ersten Halbleiterreihenschaltung miteinander verbunden sind und gleiche Durchlassrichtung aufweisen. Das Schaltmodul SM2 umfasst ferner einen dritten abschaltbaren Halbleiterschalter H3, dem eine dritte Freilaufdiode D3 antiparallel geschaltet ist, und einen vierten abschaltbaren Halbleiterschalter H4, dem eine vierte Freilaufdiode D4 antiparallel geschaltet ist, wobei der dritte und der vierte Halbleiterschalter H3, H4 in einer zweiten Halbleiterreihenschaltung miteinander verbunden sind und gleiche Durchlassrichtung aufweisen. Die beiden Halbleiterreihenschaltungen sind parallel zueinander und zu einem Energiespeicher C in Form eines Kondensators angeordnet, an dem eine Kondensatorspannung Uc ansteht. Des Weiteren umfasst das Schaltmodul SM1 ferner eine erste Anschlussklemme X1, die zwischen den Halbleiterschaltern H1, H2 der ersten Halbleiterreihenschaltung angeordnet ist, und eine zweite Anschlussklemme X2, die zwischen den Halbleiterschaltern H3, H4 der zweiten Halbleiterreihenschaltung angeordnet ist. Durch geeignete Ansteuerung der Halbleiterschalter H1-4 kann an den Anschlüssen X1, X2 eine Schaltmodulspannung USM1 erzeugbar, die der Kondensatorspannung Uc entspricht, der negativen Kondensatorspannung -Uc entspricht, oder aber eine Nullspannung.

Figur 3 zeigt ein Schaltmodul SM2 des zweiten Typs, das für den Stromrichter der Figur 1 geeignet ist, und das in einer Halbbrückenschaltung geschaltet ist. In einem Kondensatorzweig ist eine Parallelschaltung eines ersten Halbleiterschalters S1 und eines Kondensators C angeordnet. In einem Brückenzweig zwischen zwei Anschlüssen X1, X2 des ersten Schaltmoduls SM2 ist ein zweiter Halbleiterschalter angeordnet. Den beiden Halbleiterschaltern S1, S2 ist jeweils eine Freilaufdiode F antiparallel geschaltet. Durch geeignete Ansteuerung der beiden Halbleiterschalter S1, S2 kann an den Anschlüssen X1, X2 eine Schaltmodulspannung USM2 erzeugbar, die der Kondensatorspannung Uc entspricht, oder aber eine Nullspannung.

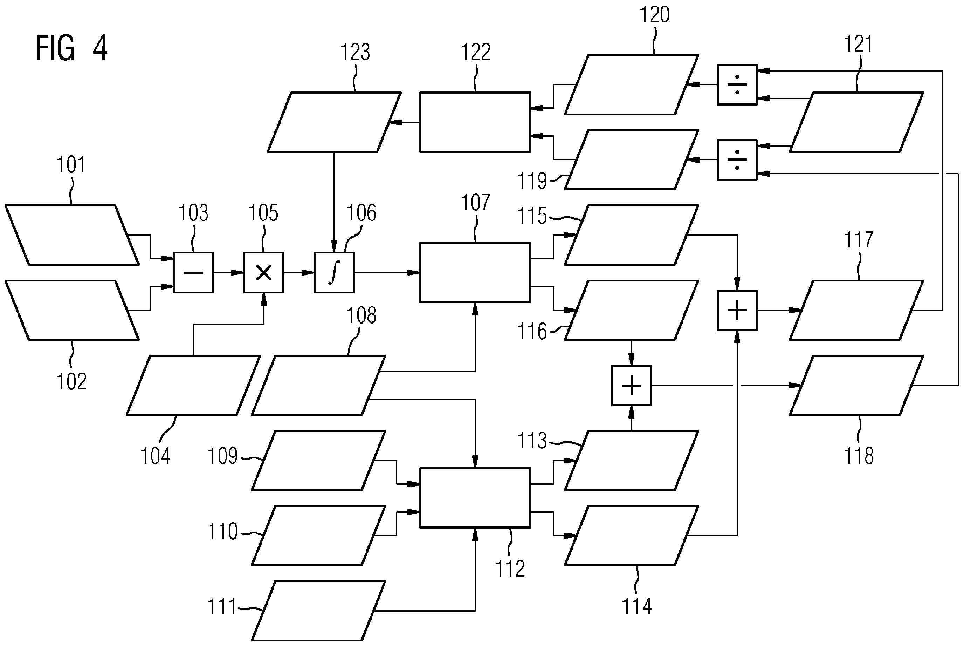

Figur 4 zeigt einen Block-Ablaufdiagramm zur Durchführung eines erfindungsgemäßen Verfahrens, wobei das Block-Ablaufdiagramm entsprechend in Blöcke bzw. Komponenten der Regelungseinrichtung des Stromrichters zu übersetzen ist. Es wird davon ausgegangen, dass der Stromrichter Schaltmodule eines ersten Typs und Schaltmodule eines zweiten Typs umfasst (beispielsweise wie der Stromrichter der Figur 1).

In einem ersten Block 101 wird ein Spannungssollwert für die Armspannung des Stromricherarmes bereitgestellt, wobei die Armspannung als Summe der Schaltmodulspannungen im betreffenden Stromrichterarm ist. In einem zweiten Block 102 wird eine gemessene Ist-Armspannung bereitgestellt. In einem Differenzblock 103 eine Differenz zwischen dem Spannungssollwert und der Ist-Armspannung gebildet. In einem vierten Block 104 wird eine Abtastungsperiode bereitgestellt. In einem fünften Block 105 wird die im Block 103 gebildete Differenz gemäß der Abtastperiode aufsummiert bzw. integriert. In einem sechsten Block wird der integrierte Wert mit einem oberen und einem unteren Integralgrenzwert verglichen. Auf der Basis dieses Vergleichs wird ein einem siebten Block 107 wird entschieden welches Schaltmodul als nächstes zu- oder abgeschaltet werden soll.

In einem achten Block 108 werden die gemessenen Energiespeicherspannungen der Schaltmodule des ersten Typs bereitgestellt. In einem neunten Block 109 wird eine maximale Abweichung zwischen einer der Energiespeicherspannungen des Blocks 108 und einem Mittelwert dieser Spannungen bereitgestellt. In einem zehnten Block 110 werden die gemessenen Energiespeicherspannungen der Schaltmodule des zweiten Typs bereitgestellt. In einem elften Block 111 wird eine maximale Abweichung zwischen einer der Energiespeicherspannungen des Blocks 110 und einem Mittelwert dieser Spannungen bereitgestellt. Aufgrund der in den Blöcken 108-111 bereitgestellten Information werden im Block 112 ausgewählte Schaltmodule für eine Symmetrierung der Schaltmodulspannungen geschaltet. Dabei können im Block 113 zusätzliche Schalthandlungen für die Schaltmodule des ersten Typs und im Block 114 zusätzliche Schalthandlungen für die Schaltmodule des zweiten Typs vorgesehen sein.

Zugleich werden entsprechend der Auswahl im Block 107 in einem Block 115 Schalthandlungen der Schaltmodule des ersten Typs und in einem Block 116 Schalthandlungen der Schaltmodule des zweiten Typs vorgenommen bzw. veranlasst. Für die Schaltmodule des ersten Typs werden die Schalthandlungen aus den Blöcken 114 und 115 addiert und im Block 117 bereitgestellt. Entsprechend werden die Schalthandlungen der Schaltmodule des zweiten Typs aus den Blöcken 113 und 116 addiert und im Block 118 bereitgestellt. Daraus werden wiederum im Block 119 bzw. im Block 120 die Schaltfrequenzen der Schaltmodule des ersten bzw. des zweiten Typs ermittelt (unter Heranziehung der im Block 121 bereitgestellten sampling time).

In einem Block 122 wird eine Frequenzregelung durchgeführt. Am Ausgang des Blocks 122 wird eine Information bereitgestellt, ob die Schaltfrequenz zu hoch oder zu niedrig ist und ob die Schaltmodulspannungen bzw. Energiespeicherspannungen innerhalb oder außerhalb eines zulässigen Spannungsabweichungsbereich liegen. Im Block 123 wird auf der Basis dieser Information ermittelt, um welchen Wert die Integralgrenzwerte verändert werden sollen.

## Patentansprüche

1. Verfahren zum Regeln eines Stromrichters (1) mit einer Vielzahl von Schaltmodulen (SM1, SM2), die jeweils steuerbare abschaltbare Halbleiterschalter (H1-4, S1-2) sowie einen Energiespeicher (C) umfassen, bei dem
eine Schaltfrequenz der Schaltmodule (SM1, SM2) unter Berücksichtigung wenigstens eines Integralgrenzwertes geregelt wird, wobei
der wenigstens eine Integralgrenzwert in Abhängigkeit von Energiespeicherspannungen der Schaltmodule (Sm1, SM2) in der Zeit veränderbar festgelegt wird.

2. Verfahren nach Anspruch 1, wobei anhand einer Auswertung der Energiespeicherspannungen deren Symmetrierung mittels zusätzlicher Schalthandlungen durchgeführt wird.

3. Verfahren nach einem der vorangehenden Ansprüche, wobei eine Spannungsdifferenz der Schaltmodulspannungen ermittelt wird, die Spannungsdifferenz mit einem Differenzgrenzwert verglichen wird, und, falls die Spannungsdifferenz den Differenzgrenzwert überschreitet, der wenigstens eine Integralgrenzwert der Schaltfrequenzregelung herabgesetzt wird.

4. Verfahren nach einem der vorangehenden Ansprüche, wobei die Schaltfrequenzregelung mittels einer Frequenzstatik durchgeführt wird.

5. Verfahren nach einem der vorangehenden Ansprüche, wobei wenigstens einige der Schaltmodule Schaltmodule eines ersten Typs (SM1) und wenigstens einige weitere der Schaltmodule Schaltmodule eines zweiten Typs (SM2) sind, und die Symmetrierung der Energiespeicherspannungen unter Berücksichtigung einer Spannungsdifferenz der Energiespeicherspannungen der Schaltmodule des ersten Typs und einer Spannungsdifferenz der Energiespeicherspannungen der Schaltmodule des zweiten Typs durchgeführt wird.

6. Verfahren nach Anspruch 5, wobei im Betrieb der Stromrichteranordnung an Anschlussklemmen der Schaltmodule des ersten Typs jeweils eine positive Schaltmodulspannung, eine negative Schaltmodulspannung oder eine Nullspannung erzeugt wird, und an Anschlussklemmen der Schaltmodule des zweiten Typs jeweils eine positive Schaltmodulspannung oder eine Nullspannung erzeugt werden.

7. Verfahren nach einem der vorangehenden Ansprüche 5 oder 6, wobei die Schaltfrequenz unter Berücksichtigung der Anzahl der Schaltmodule des ersten und des zweiten Typs durchgeführt wird.

8. Verfahren nach einem der vorangehenden Ansprüche 5 bis 7, wobei die Schaltmodule des Stromrichterarmes mit einem Modulationsgrad größer als eins gesteuert werden.

9. Verfahren nach einem der vorangehenden Ansprüche, wobei zur Schaltfrequenzregelung eine mittlere Schaltfrequenz der Schaltmodule ermittelt wird, wobei die mittlere Schaltfrequenz mittels eines gleitenden Durchschnittsfilters gefiltert wird.

10. Stromrichter (1) für Mittel- und Hochspannungsanwendungen, der eine Vielzahl von Schaltmodulen (SM1, SM2), die jeweils steuerbare abschaltbare Halbleiterschalter (H1-4, S1, S2) und einen Energiespeicher (C) aufweisen, sowie eine Regelungseinrichtung (12) zum Regeln des Stromrichters umfasst, **dadurch gekennzeichnet, dass** die Regelungseinrichtung (12) zum Durchführen des Verfahrens nach einem der Ansprüche 1 bis 9 eingerichtet ist.
